# EUROPÄISCHE PATENTSCHRIFT

(11) **EP 1 665 727 B1**
(45) Veröffentlichungstag und Bekanntmachung des Hinweises auf die Patenterteilung: **21.03.2018**
(21) Anmeldenummer: 04766423.0
(22) Anmeldetag: 04.08.2004
(51) Int. Cl.: H04L 29/06

(54) **VERFAHREN ZUM VERMITTELN VON INFORMATIONEN**
DATA TRANSMISSION METHOD
PROCÉDÉ POUR TRANSMETTRE DES INFORMATIONS

(30) Priorität: 26.09.2003 DE 10344764
(43) Veröffentlichungstag der Anmeldung: 07.06.2006
(73) Patentinhaber: Siemens Aktiengesellschaft, 80333 München (DE)
(72) Erfinder: BOUCEK, Alfred, A-2241 Schönkirchen (AT); OSKOUEI, Mohammad Reza, A-1200 Wien (AT)
(86) Internationale Anmeldenummer: PCT/EP2004/051718
(87) Internationale Veröffentlichungsnummer: WO 2005/032093

(56) Entgegenhaltungen:
- EP-A- 0 813 327
- US-A1- 2002 157 007
- US-A1- 2002 162 029
- US-A1- 2003 056 097
- US-A1- 2003 159 034

## Beschreibung

Im Rahmen der Optimierung von aktuellen Kommunikationsnetzen, insbesondere vom breitbandigen Teilnehmerzugangsnetzen - auch als Access-Networks bezeichnet - soll einer großen Anzahl von Teilnehmern kostengünstig der Zugang zu Breitband-Diensten, wie beispielsweise "breitbandiger Internetanschluss" oder "Video-On-Demand" bereitgestellt werden.

Im Teilnehmerzugangsbereich aktueller Kommunikationsnetze sind die Teilnehmer bzw. sind den Teilnehmern zugeordnete Kommunikationseinrichtungen, wie beispielsweise Netzabschlusseinrichtungen (NT, Network Termination), über ein- oder mehradrige Teilnehmeranschlussleitungen an zentrale Vermittlungseinrichtungen oder digitale Multiplexer-Einrichtungen (Digital Subscriber Line Access Multiplexer, DSLAM) angeschlossen. Als physikalisches Übertragungsverfahren wird auf der Teilnehmeranschlussleitung häufig ein xDSL-Übertragungsverfahren (z.B. ADSL) eingesetzt, wobei die zwischen den Teilnehmern und der zentralen Vermittlungseinrichtung auszutauschenden Informationen, beispielsweise im Rahmen eines paket- oder zellenorientierten Übertragungsverfahren (Ethernet und/oder asynchroner Transfermodus, ATM) übermittelt werden. Der Aufbau einer Kommunikationsbeziehung - auch als Link bezeichnet - zwischen z.B. einer Netzabschlusseinrichtung und der zentralen Vermittlungseinrichtung erfolgt im Rahmen des xDSL-Übertragungsverfahrens bzw. -Protokolls. Beim ADSL-Protokoll werden z.B. die ADSL-Kanäle und damit die Übertragungsgeschwindigkeit ausgehandelt.

Häufig ist auf Seiten des Teilnehmers ein lokales Netz (LAN, Lokal Area Network) angeordnet, über welches ein oder mehrere einem Teilnehmer jeweils zugeordnete Kommunikationsendeinrichtungen (wie z. B. Personalcomputer, Workstation, Server, Multimedia-Endgeräte usw.) an die den jeweiligen Teilnehmer zugeordnete Netzabschlusseinrichtung angeschlossen und somit über die Teilnehmeranschlussleitung mit der Vermittlungseinrichtung bzw. mit dem DSLAM verbunden sind. Die im Teilnehmerbereich angeordneten lokalen Kommunikationsnetze bzw. LANs sind beispielsweise gemäß dem Ethernet-Übertragungsverfahren bzw. -Protokoll - nach dem Standard IEEE 802.3 oder nach Ethernet II bzw. Ethernet V2 - als Rahmen- bzw. Paketorientiertes, verbindungsloses Kommunikationsnetz ausgestaltet. Die im Teilnehmerbereich gebildeten Ethernet-Datenrahmen bzw. Ethernet-Frames werden in ATM-Zellen eingefügt und über die Teilnehmeranschlussleitung an die Vermittlungseinrichtung bzw. an den DSLAM übermittelt. Die mittels der ATM-Übertragungstechnologie an die Vermittlungseinrichtung bzw. an den DSLAM übermittelten Ethernet-Datenrahmen werden anschließend über zumindest ein weiteres daran angeschlossenes, übergeordnetes Kommunikationsnetz weitervermittelt, welches gemäß einem beliebigen Paket- oder zellenorientierten Übertragungsverfahren - z. B. ATM, IEEE 802.x, Internetprotokoll IP - ausgestaltet sein kann.

Zur Übertragung von paketorientierten Informationen (wie beispielweise Ethernet-Frames) über Punkt-zu-Punkt-Verbindungen
- welche beispielsweise als Modem-, ISDN-, Frame Relay-, X.25- oder SDH-Verbindung ausgestaltet sein können - wird häufig das Point-to-Point Protokoll (PPP) eingesetzt. Das PPP besteht aus drei Komponenten.
- Ein Verfahren um paketorientierte Informationen entsprechend verpackt zu übertragen - auch als PPP-Encapsulation bezeichnet. Dabei wird von einer bidirektionalen Vollduplex-Übertragung ausgegangen,
- Aufbauen, Konfigurieren und Testen einer Übertragungsstrecke mittels Link Control Protokoll (LCP),
- Auf- und Abbau und Konfiguration verschiedener Schicht-3-Protokolle mit Hilfe des Network Control Protokolls (NCP).

PPP lässt sich über eine Vielzahl von im OSI-Referenzmodell in den tieferen Schichten angeordneten Protokollen transportieren wie beispielsweise x.25-, Frame Relay-, ISDN-, ATMsowie Ethernet und Internetprotokoll IP.

Das Übertragen von PPP über gemäß IEEE 802.3 (Ethernet) oder gemäß Ethernet V2 ausgestalteten Kommunikationsnetzen wird auch als PPPoE (PPP over Ethernet) bezeichnet und ist gemäß RFC 2516 spezifiziert.

Die PPP-gestützte Kommunikation durchläuft eine Reihe von Zuständen:
Vor Beginn der PPP-gestützten Kommunikation muss jedoch ein Link zwischen Teilnehmer (Kommunikationseinrichtung oder Netzabschlusseinrichtung) und Vermittlungseinrichtung beispielsweise mittels eines xDSL-Protokolls eingerichtet werden.

Aus einem inaktiven Zustand (Link Dead) wird das System z. B. durch ein Carrier Detect Signal, welches üblicherweise von einem Modem erzeugt wird "geweckt". Während des Aufbaus einer Kommunikationsbeziehung bzw. virtuellen Verbindung (Link Establishment Phase) werden mittels Nachrichten des Link Control Protokoll (LCP) die Konfiguration des Links ausgehandelt. An die Link Establishment Phase kann sich, falls gefordert, eine Authentifizierung-Phase anschließen.

Nach einer optionalen Authentifizierung wird mit Hilfe des Network Control Protokoll (NCP) für jedes Netz-Protokoll eine eigene Konfigurationsphase durchgeführt. Daran schließt sich die Nutzdaten-Übertragung mittels dem jeweils gewählten Network Layer-Protokoll an.

Die Informationsübermittlung kann jederzeit beendet werden. Dies kann durch externe Ereignisse geschehen, wie beispielsweise Verlust der Schichts-1-Verbindung (Loss of Carrier) oder gewollt durch Austausch von entsprechenden LCP-Nachrichten.

Wie bereits erläutert setzt sich ein Verbindungsaufbau über ein Point-to-Point Protokoll aus zwei Phasen zusammen.
- Konfiguration der Datenübertragungs-Schicht (Link Layer) mit dem Link Control Protokoll (LCP) und
- Konfiguration der Netzwerkschicht mit dem Network Control Protokoll (NCP).

Zwischen diesen beiden Konfigurations-Verfahren kann die optionale Authentisierung stattfinden. Ob, und wenn ja welcher Typ der Authentifizierung zur Anwendung kommt, wird mit Hilfe des LCP ausgehandelt. Es sind verschiedene Methoden zur Authentisierung bekannt, z.B.
- Password Authentication Protokoll (PAP)
- Challenge Handshake Authentication Protokoll (CHAP)
- PPP extension Authentication Protokoll (EAP)

Für die Authentisierung/Autorisierung muss ein speziell dafür im Kommunikationsnetz vorgesehenes Netzwerkelement - auch als Network Access Server (NAS) oder Access-Router bezeichnet - Kenntnis über den Teilnehmer haben, der sich authentisieren will. Anstatt im Network Access Server diese Informationen lokal zu speichern wird häufig ein Server im Kommunikationsnetz vorgesehen, dem mehrere Network Access Server zugeordnet sind. Durch diese Zuordnungen ist es für einen Teilnehmer möglich, sich an unterschiedlichen Orten des Kommunikationsnetzes einzuloggen.

Die Authentisierung erfolgt in aktuellen Kommunikationsnetzen mit Hilfe eines Radius-Protokoll (Remote Authentication Dial In User Service) mit dem ein Network Access Server mit einem speziell dafür vorgesehenen Authentication Server (auch als Radius-Server bezeichnet) Informationen über die Authentisierung, Autorisierung und Konfigurierung austauscht. Der Authentication-Server kann auch andere Aufgaben wahrnehmen, z. B. im Rahmen der Entgelt Erfassung (Vergebührung).

Die in Kommunikationsnetzen aktuell eingesetzten Authentisierungs-Verfahren beruhen hauptsächlich in der Überprüfung von übermittelten Benutzer-Informationen und Passwörtern. Dies kann für die immer mehr an Bedeutung gewinnenden Sicherheitsanforderungen hinsichtlich Datenübertragung über Kommunikationsnetze nicht mehr

US2002/0162029 offenbart ein Authentisierungsverfahren, basiert auf einen Teilnehmeranschluss repräsentierenden Anschlussinformationen.

Der Erfindung liegt die Aufgabe zugrunde, die Sicherheit bei der Informationsübermittlung innerhalb von Kommunikationsnetzen zu verbessern. Die Aufgabe wird Ausgehen von einem Verfahren und einer Kommunikationsanordnung gemäß dem Merkmalen der Patentansprüche 1 und 13 gelöst.

Der wesentliche Aspekt des erfindungsgemäßen Verfahrens zum Übermitteln von Informationen über zumindest einen in zumindest einem Kommunikationsnetz angeordneten Teilnehmeranschluss besteht darin, dass den zumindest einen Teilnehmeranschluss repräsentierende Anschluss-Informationen an das Kommunikationsnetz übermittelt werden. Mit Hilfe der übermittelten Anschluss-Informationen wird die Authentizität, der über den zumindest einen Teilnehmeranschluss zu übermittelten Informationen überprüft.

Der wesentliche Vorteil des erfindungsgemäßen Verfahrens besteht darin, dass für die Authentisierung bzw. Autorisierung eines eine Kommunikationsbeziehung über das Kommunikationsnetz initiierenden Teilnehmers neben den üblicherweise zur Verfügung stehenden, teilnehmerbezogenen Informationen (Be nutzer-Namen und Passwort) eine zusätzliche, den Teilnehmeranschluss repräsentierende Anschluss-Information zur Überprüfung bereit gestellt wird. Die in aktuellen Kommunikationsnetzen angeordneten Netzwerkelemente, insbesondere die Network Access Server (NAS) oder Access-Router haben üblicherweise keine Informationen darüber, über welchen Port bzw. Teilnehmeranschluss oder über welche Teilnehmeranschlussleitung der Teilnehmer aktuell mit dem Kommunikationsnetz verbunden ist. Somit stellt das Übermitteln der Anschluss-Information eine zusätzliche Sicherheitsfunktion dar, wodurch eine Verbesserung der Authentisierung von Teilnehmern und damit eine Verbesserung der Sicherheit der über das Kommunikationsnetz übermittelten Informationen erreicht wird.

Vorteilhaft werden die Informationen gemäß dem PPPoE-Übertragungsverfahren bzw. -protokoll nach RFC 2516 über den zumindest einen Teilnehmeranschluss übertragen - Anspruch 7. Die Spezifikation RFC 2516 lässt im Rahmen des PPPoE-Protokolls sogenannte "TAGs" zu, so dass vorteilhaft die Anschluss-Informationen als "Relay Session ID Tag"-Informationen in über den zumindest einen Teilnehmeranschluss an das Kommunikationsnetz übermittelte "PPPoE Active Discovery" (PADI)-Meldungen eingefügt werden - Anspruch 8. Diese vorteilhafte Ausgestaltung stellt keine Weiterbildung sondern eine vorteilhafte Anwendung des PPPoE-Übertragungsprotokolls dar, wobei bereits vorhandene Übertragungsressourcen bzw. Informationsfelder in den PADI-Meldungen zur Übermittlung der Anschluss-Informationen genutzt werden - es ist keine Änderung oder Ergänzung PPPoE-Protokolls erforderlich.

Weitere vorteilhafte Ausgestaltungen des erfindungsgemäßen Verfahrens sowie eine Kommunikationsanordnung zum sicheren Übermitteln von Informationen sind den weiteren Ansprüchen zu entnehmen.

Im folgenden wird das erfindungsgemäße Verfahren anhand mehrerer Zeichnungen näher erläutert. Dabei zeigen
- FIG 1: eine Kommunikationsanordnung bei welchen das erfindungsgemäße Verfahren zum Einsatz kommt und
- FIG 2: das erfindungsgemäße Einfügen der Anschluss-Informationen in das PPPoE-Übertragungsprotokoll

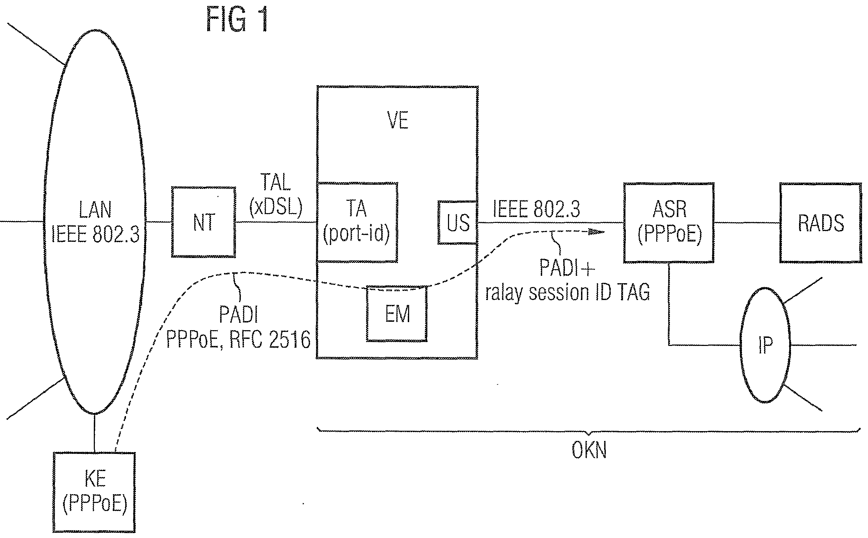

FIG 1 zeigt in einem Blockschaltbild eine in einem übergeordneten Kommunikationsnetz OKN angeordnete Vermittlungseinrichtung VE welche auch als digitale Zugangs-Multiplexer-Einrichtung - auch als DSLAM, Digital Subscriber Line Access Multiplexer bezeichnet - ausgestaltet sein kann. Die Vermittlungseinrichtung VE weist mehrere Teilnehmeranschlüsse TA auf - in FIG 1 ist nur ein Teilnehmeranschluss stellvertretend für viele dargestellt - an welchen über eine Teilnehmeranschlussleitung TAL teilnehmerseitig eine Netzabschlusseinrichtung NT (Network Termination) angeschlossen ist. Der im Blockschaltbild dargestellte Teilnehmeranschluss TA ist Bestanteil einer mehrere dieser Anschlüsse aufweisenden Anschlusseinheit - nicht dargestellt. An die Netzabschlusseinrichtung NT ist ein einem Teilnehmer zugeordnetes, gemäß dem Ethernet-Übertragungsverfahren (IEEE Standard IEEE 802.3 oder Ethernet V2) ausgestaltetes lokales Kommunikationsnetz LAN angeschlossen. Über das lokale Kommunikationsnetz LAN sind mehrere Kommunikationsendgeräte, wie beispielsweise Personalcomputer, Multimediakommunikationsendgeräte, über die Teilnehmeranschlussleitung und über die Vermittlungseinrichtung VE mit dem übergeordneten Kommunikationsnetz OKN verbunden. Sowohl in der Netzabschlusseinrichtung NT als auch in der Teilnehmeranschlusseinheit TAE ist jeweils ein Modem angeordnet - nicht dargestellt - durch welche in diesem Ausführungsbeispiel ein xDSL-Übertragungsverfahren wie z. B. ADSL als physikalisches Übertragungsverfahren über die Teilnehmeranschlussleitung TAL realisiert ist.

Die Vermittlungseinrichtung VE ist über eine Uplink-Schnittstelle US und eine Uplink-Verbindung LNK mit einer in dem übergeordneten Kommunikationsnetz OKN angeordneten Netzwerk-Zugangs-Einrichtung ASR - im folgenden auch als Access Router bezeichnet - verbunden. Dem Access Router ASR ist ein ebenfalls im übergeordneten Kommunikationsnetz OKN angeordneter Authentifizierung-Server RADS zugeordnet, in welchem verschiedenen Funktionen für die Authentifizierung und Autorisierung von Kommunikationsbeziehungen initiierenden Teilnehmern realisiert sind. Die Authentifizierung bzw. Autorisierung erfolgt beispielsweise gemäß dem Radius-Protokoll. Über den beispielsweise lokal bei einem Internet-Service-Provider (ISP) angeordneten Access-Router ASR wird der Zugang von Teilnehmern in das einen Bestandteil des übergeordneten Kommunikationsnetzes OKN bildenden Internet IP gesteuert.

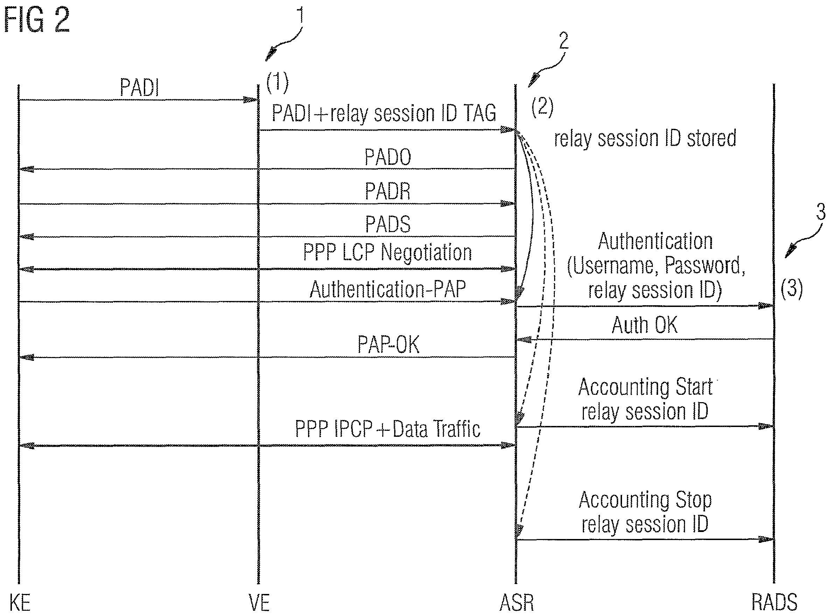

Im folgenden wird das erfindungsgemäße Verfahren näher erläutert. Für die Nachfolgenden Ausführungen sei gleichzeitig auf FIG 2 verwiesen, bei dem der Austausch von Meldungen im Rahmen des PPPoE-Protokolls beim Aufbau einer Kommunikationsbeziehung bzw. Verbindung zwischen den beteiligten Kommunikationseinrichtungen dargestellt ist.

Es sei angenommen, dass durch das teilnehmerseitig mit dem LAN verbundene Kommunikationsendgerät KE - beispielsweise ein in einem Internet Café angeordnete Personalcomputer - eine Datenverbindung in das Internet IP aufgebaut werden soll. Hierzu wird vom Kommunikationsendgerät KE der Aufbau einer PPPoE-Verbindung zum im übergeordneten Kommunikationsnetz OKN angeordneten Access Router ASR initiiert. In diesem Fall stellt das Kommunikationsendgerät KE einen PPPoE-Client und der Access Router ASR einen PPPoE-Server dar. Der PPPoE-Client kann auch in der Netzabschlusseinrichtung NT angeordnet sein. Durch in der Vermittlungseinrichtung VE angeordnete Einfügungsmittel EM werden die von Kommunikationsendgerät KE im Rahmen des PPPoE-Protokolls in Richtung Access Router ASR übermittelten PADI-Pakete erfasst und standardmäßig um einen "Relay Session ID TAG" erweitert - siehe Punkt 1 in FIG 2. Erfindungsgemäß wird durch diese eingefügte Relay Session ID TAG eine den Teilnehmeranschluss TA bzw. die Teilnehmeranschlussleitung TAL repräsentierende Anschluss-Information port-id - hier die Port-ID - repräsentiert. Durch die PORT-ID ist der Teilnehmeranschluss TA bzw. die daran angeschlossene Teilnehmeranschlussleitung TAL eindeutig innerhalb der Vermittlungseinrichtung bzw. in der entsprechenden Anschlusseinheit identifiziert und damit adressiert. Die durch die Einfügemittel EM erweiterten PADI-Pakete werden von der Vermittlungseinrichtung VE über die Uplink-Verbindung LNK zum im Access Router ASR angeordneten PPPoE-Server übermittelt, durch welchen das PPPoE-Protokoll terminiert wird - durch einen strichlierten Pfeil in FIG 1 verdeutlicht. Durch den PPPoE-Server wird der jeweilige in den PADI-Meldungen enthaltene und die Anschluss-Information bzw. die PORT-ID repräsentierende TAG Value der Relay Session ID extrahiert. Die extrahierte Anschluss-Information port-id kann optional zusammen mit den üblichen teilnehmerbezogenen Authentifizierungs-Informationen (wie z.B. Benutzername bzw. Benutzerkennung und Passwort) im Access-Router ASR gespeichert werden - siehe Punkt 2 in FIG 2. Die so extrahierten Anschluss-Informationen port-id werden vom Access-Router im Zuge der durchzuführenden Authentifizierung zum Radius-Server RADS weitergeleitet - siehe Punkt 3 in FIG 2.

Das Übermitteln der Anschluss-Informationen port-id zusammen mit den weiteren teilnehmerbezogenen Authentifizierungs-Informationen an den Radius-Server RADS erfolgt z.B. im Rahmen von im Standard RFC 2516 spezifizierten Athentication Requests und Accounting Requests beispielsweise mit dem Radius-Attribut 31 "Calling Station ID".

Durch den Radius-Server RADS kann die übermittelte Anschluss-Information Port-ID in Rahmen der Authentifizierung z. B. mit den parallele übermittelten Benutzernamen und Passwort verglichen werden, wodurch eine erhöhte Sicherheit beim Übermitteln von Informationen erreicht wird.

Nach erfolgreicher Authentisierung des Teilnehmers wird vom Access-Router ASR eine Nutzdatenverbindung zwischen dem Teilnehmer und dem Kommunikationsnetz - hier dem Internet IP - hergestellt über die die Informationen übermittelt bzw. ausgetauscht werden.

Das Übermitteln der Anschluss-Informationen port-id in das Kommunikationsnetz kann sowohl während des Aufbaus einer Kommunikationsbeziehung wie z.B. einer PPP-Verbindung als auch während des gesamten Bestehens der Kommunikationsbeziehung erfolgen.

Das Übermitteln der Anschluss-Informationen port-id kann auch ihm Rahmen eines anderen Übertragungsprotokolls erfolgen, wie beispielsweise:
- PPTP Point-to-Point Tunneling Protocol
- L2PT Layer-2 Tunneling Protocol

## Patentansprüche

1. Verfahren zum Übermitteln von Informationen über einen in einem gemäß dem Ethernet-Übertragungsverfahren ausgestalteten Kommunikationsnetz (OKN) angeordneten Teilnehmeranschluss (TA),
bei dem den Teilnehmeranschluss (TA) repräsentierende Anschluss-Informationen (port-id) an das Kommunikationsnetz (OKN, ASR) übermittelt werden, und
bei dem mit Hilfe der übermittelten Anschluss-Informationen (port-id) die Authentizität der über den Teilnehmeranschluss (TA) zu übermittelnden Informationen überprüft wird,
wobei
die Anschluss-Informationen (port-id) als "Relay Session ID TAG" durch eine dem Teilnehmeranschluss (TA) im Kommunikationsnetz zugeordnete Vermittlungseinrichtung (VE) in über den Teilnehmeranschluss (TA) an das Kommunikationsnetz (OKN, ASR) übermittelte PPPoE Active Discovery (PADI) Meldungen eingefügt werden.

2. Verfahren nach Anspruch 1,
**dadurch gekennzeichnet,**
**dass** die Anschluss-Informationen (port-id) als Port-Identifizierung oder PORT-ID ausgestaltet sind und/oder zumindest eine an den zumindest einen Teilnehmeranschluss (TA) angeschlossene Teilnehmeranschlussleitung (TAL) repräsentiert.

3. Verfahren nach Anspruch 1 oder 2,
**dadurch gekennzeichnet,**
**dass** die übermittelten Anschluss-Informationen (port-id) im Kommunikationsnetz (OKN, ASR) gespeichert werden.

4. Verfahren nach Anspruch einem der vorherigen Ansprüche, **dadurch gekennzeichnet,**
**dass** die zu übermittelnden Informationen im Rahmen einer Kommunikationsbeziehung (PPPoE) über den zumindest einen Teilnehmeranschluss (OKN) übermittelt werden, wobei die Anschluss-Informationen (port-id) zumindest beim Aufbau der Kommunikationsbeziehung (PPPoE) an das Kommunikationsnetz (BKN, ASR) übermittelt werden.

5. Verfahren nach einem der vorherigen Ansprüche,
**dadurch gekennzeichnet,**
**dass** der zumindest eine Teilnehmeranschluss,(TA) einer im Kommunikationsnetz (OKN) angeordneten Vermittlungseinrichtung (VE) zugeordnet ist, wobei durch die Vermittlungseinrichtung (VE) die Anschluss-Informationen (port-id) in die PPPoE Active Discovery (PADI) Meldungen eingefügt und an ein in dem zumindest einem Kommunikationsnetz (OKN) angeordnetes und den Zugang zu dem zumindest einem Kommunikationsnetz (OKN, IP) steuerndes Zugangs-Netzwerkelement (ASR) weitervermittelt werden.

6. Verfahren nach Anspruch 5,
**dadurch gekennzeichnet,**
**dass** im Zugangs-Netzwerkelement (ASR) die "Relay Session ID TAG"-Informationen in den übermittelten PPPoE Active Discovery (PADI) Meldungen erfasst, die Anschluss-Informationen (port-id) extrahiert und die extrahierten Anschluss-Informationen (port-id) vom Zugangs-Netzwerkelement (ASR) an ein im Kommunikationsnetz (OKN) angeordnetes Authentifizierungs-Netzwerkelement (RADS) übermittelt werden, wobei vom Authentifizierungs-Netzwerkelement (RADS) mit Hilfe der übermittelten Anschluss-Informationen (port-id) die Authentizität der zu übermittelnden Informationen überprüft wird.

7. Verfahren nach einem der vorherigen Ansprüche,
**dadurch gekennzeichnet,**
**dass** über den zumindest einen Teilnehmeranschluss (TA) zumindest ein Teilnehmer an das Kommunikationsnetz (OKN) angeschlossen ist,
**dass** die Überprüfung der Authentizität mit Hilfe der übermittelten Anschluss-Informationen (port-id) und mit Hilfe von den zumindest einen Teilnehmer repräsentierenden Teilnehmer-Informationen erfolgt.

8. Verfahren nach Anspruch 7,
**dadurch gekennzeichnet,**
**dass** die Teilnehmer-Informationen zumindest einen Benutzernamen und zumindest ein Passwort umfassen.

9. Kommunikationsanordnung zum Übermitteln von Informationen über einen in einem gemäß dem Ethernet-Übertragungsverfahren ausgestalteten Kommunikationsnetz (OKN) angeordneten Teilnehmeranschluss (TA),
mit Mitteln (EM) zum Übermitteln von den Teilnehmeranschluss repräsentierenden Anschluss-Informationen (port-id) an das Kommunikationsnetz (OKN),
mit im Kommunikationsnetz (OKN) angeordneten Authentifizierungsmitteln (RADS) zur Überprüfung der Authentizität der über den Teilnehmeranschluss (TA) zu übermittelnden Informationen mit Hilfe der übermittelten Anschluss-Informationen (port-id),
wobei
die Mittel (EM) zum Übermitteln der Anschluss-Informationen (port-id) derart ausgestaltet sind, dass durch diese die Anschluss-Informationen (port-id) als "Relay Session ID TAG" durch eine dem Teilnehmeranschluss (TA) im Kommunikationsnetz zugeordnete Vermittlungseinrichtung (VE) in über den Teilnehmeranschluss (TA) an das Kommunikationsnetz (OKN, ASR) übermittelte PPPoE Active Discovery (PADI) Meldungen eingefügt werden.

10. Kommunikationsanordnung nach Anspruch 9,
**dadurch gekennzeichnet,**
**dass** der zumindest eine Teilnehmeranschluss und die Mittel (EM) zum Übermitteln der Anschluss-Informationen (port-id) einer in dem Kommunikationsnetz angeordneten Vermittlungseinrichtung (VE) zugeordnet ist.

## Claims

1. Method for the transmission of data via a subscriber's connection (TA) located in a communication network (OKN) designed according to the Ethernet transmission method,
in which connection data (port-id) representing the subscriber's connection (TA) is transmitted to the communication network (OKN, ASR) and in which the transmitted connection data (port-id) is used to authenticate the data to be transmitted via the subscriber's connection (TA),
wherein
the connection data (port-id) is inserted as the "Relay Session ID TAG" into the PPPoE Active Discovery (PADI) messages transmitted via the subscriber's connection (TA) to the communication network (OKN, ASR) by means of a switching device (VE) allocated to the subscriber's connection (TA) in the communication network.

2. Method in accordance with claim 1,
**characterised in that**
the connection data (port-id) is designed as a port identification or PORT-ID and/or represents at least one subscriber connecting line (TAL) connected to the at least one subscriber's connection (TA).

3. Method in accordance with claim 1 or 2,
**characterised in that**
the transmitted connection data (port-id) is stored in the communication network (OKN, ASR).

4. Method in accordance with one of the preceding claims,
**characterised in that**
the data to be transmitted is transmitted within the framework of a communication link (PPPoE) via the at least one subscriber's connection (OKN), wherein the connection data (port-id) is at least transmitted to the communication network (BKN, ASR) on the establishment of the communication link (PPPoE).

5. Method in accordance with one of the preceding claims,
**characterised in that**
the at least one subscriber's connection (TA) is allocated to a switching device (VE) located in a communication network (OKN), wherein through the switching device (VE), the connection data (port-id) is inserted into the PPPoE Active Discovery (PADI) messages and is forwarded to an access network element (ASR) located in the at least one communication network (OKN) and controlling the access to the at least one communication network (OKN, IP).

6. Method in accordance with claim 5,
**characterised in that**
in the access network element (ASR), the "Relay Session ID TAG" identifies data in the transmitted PPPoE Active Discovery (PADI) messages, extracts the connection data (port-id) and the extracted connection data (port-id) is transmitted from the access network element (ASR) to an authentication network element (RADS) located in the communication network (OKN), wherein the data to be transmitted is verified by the authentication network element (RADS) by using the transmitted connection data (port-id).

7. Method in accordance with one of the preceding claims,
**characterised in that**
via the at least one subscriber's connection (TA), at least one subscriber is connected to the communication network (OKN), and that
the verification of the authentication is carried out by using the transmitted connection data (port-id) and by using the subscriber data representing the at least one subscriber.

8. Method in accordance with claim 7,
**characterised in that**
the subscriber data includes at least one user name and at least one password.

9. Communication system for the transmission of data via a subscriber's connection (TA) located in a communication network (OKN) designed according to the Ethernet transmission method,
with the means (EM) for the transmission of connection data (port-id) to the communication network (OKN) representing the subscriber's connection,
with the authentication means (RADS) located in the communication network (OKN) in order to verify the authenticity of the data to be transmitted via the subscriber's connection (TA) by using the transmitted connection data (port-id),
wherein
the means (EM) for the transmission of connection data (port-id) are designed in such a way that via these means the connection data (port-id) is inserted as the "Relay Session ID TAG" into the PPPoE Active Discovery (PADI) messages transmitted via the subscriber's connection (TA) to the communication network (OKN, ASR) by means of a switching device (VE) allocated to the subscriber's connection (TA) in the communication network.

10. Communication system according to claim 9,
**characterised in that**,
the at least one subscriber's connection and the means (EM) for the transmission of the connection data (port-id) is allocated to a switching device (VE) located in the communication network.

## Revendications

1. Procédé pour transmettre des informations via un raccordement d'abonné (TA) agencé dans un réseau de communication (OKN) réalisé selon le procédé de transmission Ethernet, dans lequel des informations de raccordement (port-id) représentant le raccordement d'abonné (TA) sont transmises au réseau de communication (OKN, ASR) et dans lequel l'authenticité des informations à transmettre via le raccordement d'abonné (TA) est vérifiée à l'aide des informations de raccordement transmises (port-id), les informations de raccordement (port-id) étant insérées en tant que « Relay Session ID TAG », par un dispositif de commutation (VE) associé au raccordement d'abonné (TA) dans le réseau de communication, dans des messages PPPoE Active Discovery (PADI) transmis au réseau de communication (OKN, ASR) via le raccordement d'abonné (TA).

2. Procédé selon la revendication 1, **caractérisé en ce que** les informations de raccordement (port-id) sont réalisées en tant qu'identification de port ou PORT-ID et/ou représentent au moins une ligne de raccordement d'abonné (TAL) raccordée à l'au moins un raccordement d'abonné (TA).

3. Procédé selon la revendication 1 ou 2, **caractérisé en ce que** les informations de raccordement transmises (port-id) sont stockées dans le réseau de communication (OKN, ASR).

4. Procédé selon l'une des revendications précédentes, **caractérisé en ce que** les informations à transmettre sont transmises dans le cadre d'une relation de communication (PPPoE) via l'au moins un raccordement d'abonné (OKN), les informations de raccordement (port-id) étant transmises au réseau de communication (BKN, ASR) au moins lors de l'établissement de la relation de communication (PPPoE).

5. Procédé selon l'une des revendications précédentes, **caractérisé en ce que** l'au moins un raccordement d'abonné (TA) est associé à un dispositif de commutation (VE) agencé dans le réseau de communication (OKN), les informations de raccordement (port-id) étant insérées dans les messages PPPoE Active Discovery (PADI) par le dispositif de commutation (VE) et étant retransmises à un élément de réseau d'accès (ASR) agencé dans l'au moins un réseau de communication (OKN) et qui commande l'accès à l'au moins un réseau de communication (OKN, IP).

6. Procédé selon la revendication 5, **caractérisé en ce que**, dans l'élément de réseau d'accès (ASR), les informations « Relay Session ID TAG » sont saisies dans les messages PPPoE Active Discovery (PADI) transmis, les informations de raccordement (port-id) sont extraites et les informations de raccordement extraites (port-id) sont transmises de l'élément de réseau d'accès (ASR) à un élément de réseau d'authentification (RADS) agencé dans le réseau de communication (OKN), l'authenticité des informations à transmettre étant vérifiée par l'élément de réseau d'authentification (RADS) à l'aide des informations de raccordement transmises (port-id).

7. Procédé selon l'une des revendications précédentes, **caractérisé en ce qu'**au moins un abonné est raccordé au réseau de communication (OKN) via l'au moins un raccordement d'abonné (TA), **en ce que** la vérification de l'authenticité est effectuée à l'aide des informations de raccordement transmises (port-id) et à l'aide des informations d'abonnés représentant au moins un abonné.

8. Procédé selon la revendication 7, **caractérisé en ce que** les informations d'abonnés comprennent au moins un nom d'utilisateur et au moins un mot de passe.

9. Système de communication destiné à transmettre des informations via un raccordement d'abonné (TA) agencé dans un réseau de communication (OKN) réalisé selon le procédé de transmission Ethernet, comportant des moyens (EM) pour transmettre des informations de raccordement (port-id) représentant le raccordement d'abonné (TA) au réseau de communication (OKN), des moyens d'authentification (RADS) agencés dans le réseau de communication (OKN) pour vérifier l'authenticité des informations à transmettre via le raccordement d'abonné (TA) à l'aide des informations de raccordement transmises (port-id), les moyens (EM) pour transmettre les informations de raccordement (port-id) étant réalisés de telle sorte que ceux-ci permettent l'insertion des informations de raccordement transmises (port-id) en tant que « Relay Session ID TAG », par un dispositif de commutation (VE) associé au raccordement d'abonné (TA) dans le réseau de communication, dans des messages PPPoE Active Discovery (PADI) transmis au réseau de communication (OKN, ASR) via le raccordement d'abonné (TA).

10. Système de communication selon la revendication 9, **caractérisé en ce que** l'au moins un raccordement d'abonné et les moyens (EM) de transmission des informations de raccordement (port-id) sont associés à un dispositif de commutation (VE) agencé dans le réseau de communication.
